# EUROPÄISCHE PATENTANMELDUNG

(11) **EP 4 424 384 A2**
(43) Veröffentlichungstag der Anmeldung: **04.09.2024**
(21) Anmeldenummer: 24156769.2
(22) Anmeldetag: 09.02.2024
(51) Int. Cl.: A62B 35/00

(54) **ANSCHLAGMITTEL**

(30) Priorität: 10.02.2023 DE 202023000319 U
(71) Anmelder: Span Set Gesellschaft für Transportsysteme und technische Bänder mit beschränkter Haftung & Co. Kommanditgesellschaft, 52531 Übach-Palenberg (DE)
(72) Erfinder: Glasen, Werner, 52134 Herzogenrath (DE); HÖLTKEMEIER, Andreas, 52511 Geilenkirchen (DE)
(74) Vertreter: Taubert, Diana

(57) **Zusammenfassung**

Die Erfindung bezieht sich auf ein textiles biegeschlaffes Anschlagmittel, insbesondere Hebebänder oder Rundschlingen, Zurrmittel und ebenfalls Absturzsicherungen, wie beispielhaft Auffanggurte, welche aus einem Grundgewebe aus einem Chemiefasergarn und einem Nähgarn aus einem Chemiefasergarn als Hochleistungsnähgarn
bestehen.

## Beschreibung

Die Erfindung bezieht sich auf ein textiles biegeschlaffes Anschlagmittel, insbesondere Hebebänder oder Rundschlingen, Zurrmittel und ebenfalls Absturzsicherungen, wie beispielhaft Auffanggurte, welche aus einem Grundgewebe aus einem Chemiefasergarn und einem Nähgarn aus einem Chemiefasergarn als Hochleistungsnähgarn bestehen.

Bisher ist es üblich, dass biegeschlaffe Anschlagmittel, Zurrmittel und Auffanggurte aus demselben Material, derselben Faserart, bestehen. Dass die Materialeigenschaften von Grundgewebe und Nähgarn gleich waren, hatte bestimmte Vorteile in der Handhabung unter anderem bezüglich Dehnung, Temperatur- und Medienbeständigkeit. Zum Einsatz kamen dabei beispielhaft Chemiefasern aus PES, PP und PA, welche unter anderem weniger abrieb- und schnittfest im Vergleich zu Hochleistungsfasern sind.

Nachteilig hatte sich in der Vergangenheit erwiesen, dass gerade an belasteten Stellen, insbesondere solchen Stellen, die einer starken mechanischen Belastung ausgesetzt sind, das Nähgarn und auch das Grundgewebe wegen der vorgenannten negativen Eigenschaften schnell verschleißen.

Ein biegeschlaffes textiles Anschlagmittel, Zurrmittel oder eine Absturzsicherung, insbesondere ein Hebeband oder einen Auffanggurt, vollständig aus einer Chemiefaser als Hochleistungsfaser, wie beispielsweise LCP, HMPE oder UHMPE, auszugestalten, wäre eine Alternative, ist jedoch sehr kostenintensiv. Darüber hinaus könnte dies unter Umständen für das Dehnungsverhalten des biegeschlaffen Anschlagmittels, insbesondere des Hebebandes, nachteilig wirken, da diese Hochleistungsfasern ein geringeres Dehnungsvermögen besitzen als herkömmlich eingesetzte Fasern aus beispielhaft PES, PP oder PA, um die Häufigsten zu nennen.

Dieser potentielle Nachteil steht den potentiellen Vorteilen einer besseren Temperaturbeständigkeit sowie einer besseren Schnitt- und Abriebfestigkeit entgegen.

Aufgabe der Erfindung ist es daher, die Nachteile des Standes der Technik zu verbessern und ein biegeschlaffes textiles Anschlagmittel, insbesondere ein Hebeband oder eine Rundschlinge, bereitzustellen, das ein vorteilhaftes Dehnungsverhalten, anders als bei dem Einsatz von Hochleistungsfasern, für das Grundgewebe und das Nähgarn aufweist, jedoch gleichsam gegenüber bisherigen textilen biegeschlaffen Lastmitteln aus beispielhaft PES, PP oder PA optimierter ausgestaltet ist. Das textile biegeschlaffe Anschlagmittel kann im Sinne der Erfindung Hebeband oder Rundschlinge, als auch Teil von Zurrmitteln, so ein Spanngurt und ebenfalls Teil einer Absturzsicherung, so ein Auffanggurt, sein.

Diese Aufgabe wird erfindungsgemäß durch ein biegeschlaffes textiles Anschlagmittel mit den Merkmalen des Hauptanspruchs 1 gelöst, wobei die Unteransprüche weitere erfindungsgemäße Ausgestaltungsvarianten dieser Lösung beinhalten.

Danach weist das biegeschlaffe textile Anschlagmittel ein Grundgewebe und Nähte auf. Die Nähte können dazu dienen, beispielhaft ein oder mehrere Teile des biegeschlaffen textilen Anschlagmittels, so beispielhaft ein oder mehrere Lagen des Grundgewebes zu fixieren oder eine Lage des Grundgewebes zu stabilisieren oder zu formen oder mehrere Teile des Grundgewebes miteinander zu verbinden. Dies stellt nur eine beispielhafte Aufzählung dar. Nähte im Sinne der Erfindung kann dabei auch nur eine Naht sein. Das Grundgewebe ist in bekannter Weise ein Flächenabschnitt, gurtartig und bei Rundschlingen schlauchartig.

Erfindungsgemäß besteht das Grundgewebe im Wesentlichen und ist damit gefertigt aus einem Chemiefasergarn, einem Garn, mit einem definierten Dehnungsverhalten und einer definierten Temperaturbeständigkeit sowie einer definierten Schnitt- und Abriebfestigkeit, beispielhaft PES, PA oder PP-Garne. Bei dem Einsatz von PES, PA oder PP-Garnen besteht ein hohes Dehnungsverhalten des Grundgewebes. Die Nähte des biegeschlaffen textilen Anschlagmittels bestehen dagegen zumindest teilweise aus einem Nähgarn einer Chemiefaser mit einer definierten Temperaturbeständigkeit und/oder einer definierten Schnitt- und Abriebfestigkeit, welche größer ist als die des Chemiefasergarns des Grundgewebes. Dieses Nähgarn wird somit im Rahmen der Erfindung als Hochleistungsnähgarn bezeichnet, wobei das Hochleistungsnähgarn neben den vorgenannten definierten Eigenschaften auch eine höhere Zugfestigkeit oder eine höhere chemische Beständigkeit aufweisen kann als die des Chemiefasergarns des Grundgewebes. Auch Garne mit derartigen Eigenschaften sind Hochleistungsnähgarne im Sinne der Erfindung. Nähgarn bzw. Hochleistungsnähgarn ist im Sinne der Erfindung nur als Sammelbegriff für linienförmige textile Gebilde zu verstehen. Darunter fällt ebenfalls ein Zwirn.

Das Hochleistungsnähgarn besteht zumindest teilweise aus einer Hochleistungsfaser, so beispielhaft aus LCP, Polybenzoxazole (PBO), Aramiden, hochmoduligem Polyethylen (HMPE) und/oder (UHMPE/ UHMWPE). Wobei bei dem Einsatz von HMPE und/oder HHMPE/UHMWPE zu erwähnen ist, dass diese eine geringere definierte Temperaturbeständigkeit aufweisen als die bisher im Grundgewebe eingesetzten bekannten Fasern, jedoch eine höhere definierte Schnitt- und Abriebfestigkeit besitzen. PBO dagegen weist eine Zugfestigkeit auf, die doppelt so hoch ist wie bei den Aramiden. Es ist gegenüber diesen noch temperaturbeständiger.

Die Nähte in Längsrichtung des biegeschlaffen textilen Anschlagmittels können im Rahmen der Ausgestaltung der Erfindung ganz oder teilweise aus dem Hochleistungsnähgarn bestehen.

Parallel verschoben zu den Langseiten kann mindestens eine weitere Naht aus dem Hochleistungsnähgarn vorgesehen sein, was verbesserte Gleiteigenschaften des biegeschlaffen textilen Anschlagmittels mit sich bringt, insbesondere bei einer erhabenen Ausgestaltung der Nähte aus dem Hochleistungsnähgarn gegenüber dem Grundgewebe.

Des Weiteren kann diagonal zwischen den beiden Nähten an den Langseiten des biegeschlaffen textilen Anschlagmittels, so beispielhaft eines Hebebandes, mindestens eine weitere Naht aus dem Hochleistungsnähgarn vorgesehen sein. Dies gewährt eine weitere verbesserte Gleiteigenschaft.

Wie bereits erwähnt, können die Nähte aus dem Hochleistungsnähgarn bestehen, die gegenüber dem Grundgewebe erhaben ausgestaltet sind. Das kann insbesondere für die Nähte in Längsrichtung, somit an Langseiten, oder diagonal verlaufend der Fall sein. Diese Ausgestaltung gewährt eine optimiertere Schnitt- und Abriebfestigkeit.

Ebenfalls können diese erhabenen Nähte wegen des geringen Gleitreibwerts des Hochleistungsnähgarns kufenähnlich wirken und die Gleiteigenschaften des biegeschlaffen textilen Anschlagmittels verbessern. Der Gleitreibwert von Dyneema liegt zwischen 0,08 bis 0,11 und der von Vectran und Technora bei 0,12 bis 0,15. In Betracht kommt zum Beispiel eine erhabene Ausgestaltung von 0,2 bis 1,0 mm.

Ferner kann vorgesehen sein, dass die Nähte an Schlaufenenden oder die Nähte an Schlaufen selbst ganz oder teilweise aus dem Hochleistungsnähgarn bestehen.

Auch kann vorgesehen werden, dass das textile biegeschlaffe Anschlagmittel mindestens eine wellenförmig gestaltete Naht aus dem Hochleistungsnähgarn in Längsrichtung aufweist, welche unter anderem die kufenähnliche Wirkung der Nähte aus dem Hochleistungsnähgarn weiter verbessert.

Die Vorteile der erfindungsgemäßen Lösung bestehen darin, dass ein Nahtbild der Nähte aus der Hochleistungsfaser ökonomischer konstruiert werden kann. Das Nahtbild kann in seiner Größe zu Nahtbildern von Nähten aus den bisher eingesetzten Garnen variieren, so dass sich eine Herstellung effizienter gestalten lassen kann. So kann unter anderem die Stichlänge der Nähte modifiziert werden. Dies kann zu einer Kostenreduktion und teilweise zu einer schnelleren Fertigung führen. Ebenfalls führt der erfindungsgemäße Einsatz von Hochleistungsnähgarn zu einer Verstärkung der Nähte und zu einer längeren Lebenszeit und damit zu einer höheren Bediensicherheit.

Die farblichen Unterschiede des Garns des Grundgewebes und des für die Nähte eingesetzten Hochleistungsnähgarns gewähren eine bessere optische Überprüfbarkeit der Nähte auf Beschädigung, denn die Hochleistungsfasern besitzen in aller Regel eine andere Farbe als die vorbeschriebenen Fasern des Grundgewebes. Dyneema ist beispielhaft weiß.

Sofern die Nähte teilweise zumindest erhaben ausgestaltet sind, gewährt dies insbesondere bei einer Ausgestaltung an den Langseiten sowie parallel verschoben und/oder diagonal eine bessere Schnitt- und Abriebfestigkeit und Temperaturbeständigkeit des textilen biegeschlaffen Anschlagmittels. Die zumindest partielle erhabene Gestaltung der Nähte wirkt dergestalt, dass die Nähte ähnlich wie Kufen fungieren und daher die dargestellten vorteilhaften Eigenschaften des Hochleistungsnähgarns sich zumindest teilweise auch auf das gesamte textile biegeschlaffe Anschlagmittel mit dem Grundgewebe aus den bisher eingesetzten Kunstfasern auswirken. Bei bisherigen Lösungen zur Gestaltung von kufenähnlichen Gebilden waren solche Kufen stets Teil des Gewebes, aber nicht als Naht selbst ausgestaltet. Eine solche Ausgestaltung reduziert aber die Kosten der Gewebeherstellung, da die kufenähnlichen Gebilde nicht extra eingewebt werden müssen. Kufenähnliche Gebilde können so sogar auch noch nachträglich an dem biegeschlaffen textilen Anschlagmittel angebracht werden, was mehr Flexibilität bei der Fertigung und bei der Einsatzbestimmung mit sich bringt.

So können beispielsweise gezielt und individuell standardmäßig gefertigte biegeschlaffe textile Anschlagmittel, wie beispielhaft Hebebänder, für bestimmte Nutzer mittels einer ergänzenden Naht aus einem Hochleistungsnähgarn modifiziert werden.

Wenn bei der vorbeschriebenen vorteilhaften Ausgestaltung parallel verschoben zu den Langseiten mindestens eine weitere Naht aus einem Hochleistungsnähgarn vorgesehen wird, können die vorgenannten vorteilhaften Eigenschaften sogar noch effektiver gewährt werden.

Das textile biegeschlaffe Anschlagmittel kann, wie vorab erwähnt, im Rahmen der Erfindung auch eine Rundschlinge sein, deren Nähte aus dem Hochleistungsnähgarn bestehen. Dabei kann vorgesehen werden, dass das Hochleistungsnähgarn der Nähte des biegeschlaffen textilen Anschlagmittels ganz oder teilweise aus einer Chemiefaser, erfindungsgemäß einer Hochleistungsfaser besteht, durch welche ein lasttragendes Innengelege des Anschlagmittels in der Ausgestaltung einer Rundschlinge gebildet wird. Das Material der Fadenschar des Innengeleges und des Nähgarns sind somit gleich. Dies ermöglicht eine verbesserte Detektion des Innengeleges. Anhand des Zustands der Nähte bzw. der Naht der Rundschlinge durch Prüfung des Zustands des Hochleistungsnähgarns können somit Rückschlüsse auf den Zustand des lasttragenden Innengeleges gezogen werden.

In einer Ausgestaltung kommt dabei in Betracht, dass das Hochleistungsnähgarn der Nähte aus mindestens einem Faden der Fadenschar gebildet ist, welcher das lasttragende Innengelege des Anschlagmittels bildet, wodurch die Detektion des Innengeleges optimiert ist.

Vorteilhafterweise können die Nähte des textilen biegeschlaffen Anschlagmittels in Form der Rundschlinge verdeckt sein, so beispielhaft durch einen partiellen Schlauch oder eine Manschette. Dies ermöglicht eine verbesserte Detektion des Innengeleges, da dieses durch eine Schutzhülle der Rundschlinge ebenfalls stets verdeckt ist. Die Umgebungsbedingungen der Nähte und des Innengeleges sind somit zumindest ähnlich.

Darüber hinaus kann im Rahmen der Erfindung das Hochleistungsnähgarn besondere Eigenschaften aufweisen, die bestimmten Hochleistungsfasern bekannterweise zukommen, wodurch diese Ausgestaltung der Erfindung weitere Vorteile mit sich bringt. So kann das Hochleistungsnähgarn derart ausgestaltet sein, dass es elektrisch leitfähig ist.

Dabei kann vorgesehen werden, dass das elektrisch leitfähige Nähgarn ganz oder teilweise aus Kohlenstofffasern besteht, so zum Beispiel aus Sigrafil C SBY, was ein Hochleistungscarbonfasergarn ist.

Ist das Nähgarn elektrisch leitfähig, können die daraus gebildeten Nähte beispielhaft in mindestens eine elektronische Vorrichtung eingebunden sein oder mit dieser zusammenwirken. Dabei können die Nähte des textilen biegeschlaffen Anschlagmittels als Nähte mit und ohne eine konstruktive Funktion ausgestaltet sein. Ohne eine konstruktive Funktion am textilen biegeschlaffen Anschlagmittel handelt es sich um bloße Indikations- oder Ziernähte, die mit der elektronischen Vorrichtung zusammenwirken. Elektronische Vorrichtungen im Sinne der Erfindung sind beispielhaft, jedoch nicht abschließend aktive oder passive Transponder, elektrische oder elektronische Messgeräte, Sensoren jeglicher Art oder allgemein Datenverarbeitungsgeräte.

Daher kann vorgesehen werden, dass das elektrisch leitfähige Hochleistungsnähgarn und damit auch ein oder mehrere Nähte des textilen biegeschlaffen Anschlagmittels, zumindest teilweise ein Leiter einer Sende- und/oder Empfangsvorrichtung und/oder ein Leiter einer Indikationsvorrichtung sein können. Leiter im Sinne der Erfindung kann ein elektrischer Stromleiter oder eine Antenne sein.

So ist es beispielhaft möglich, eine Beschädigung einer Naht zu detektieren. Ist die Naht beschädigt, ist der Stromfluss unterbrochen bzw. eingeschränkt, was beispielhaft über einen veränderten Widerstand messbar ist. Wenn eine Naht als Antenne ausgestaltet ist, ist bei einer Beschädigung die Empfangs- und Sendeleistung gemindert.

In einem derartigen Fall kann die Ablegereife des textilen biegeschlaffen Anschlagmittels beispielhaft durch die vorgenannten Wirkungen einer Unterbrechung eines Schaltkreises oder einer Reduzierung der Leistung einer Antenne erkannt werden.

Als Sende- und/oder Empfangsvorrichtung kommt ein Transponder in Betracht, beispielhaft ein RFID / NFC-Transponder. Der Transponder kann als passiver Transponder ausgestaltet sein, auch als Sensor zur Erfassung von mindestens einem Datum als Messdatum, wodurch es möglich ist, das mindestens eine erfasste Messdatum mit einem gespeicherten Istwert zu vergleichen und auszuwerten.

Diese Ausgestaltung des erfindungsgemäßen Anschlagsmittels ermöglicht es beispielhaft, eine Beschädigung einer Naht des Anschlagmittels zu erkennen und drahtlos zu detektieren und zu übertragen.

Beispielhaft kommt die Temperatur in Betracht. Wie vorbeschrieben, weist HMPE und/oder HHMPE/UHMWPE als Fasergarn des lasttragenden Geleges einer Rundschlinge eine geringere definierte Temperaturbeständigkeit auf als die im Grundgewebe, so der in der Schutzhülle eingesetzten bekannten Fasern. Eine überhöhte Temperatur kann mittels der Einbindung einer Naht aus einem elektrisch leitenden Hochleistungsnähgarn in einen vorbeschriebenen Sensor leicht drahtlos erkannt werden, was eine Detektion ohne direkte optische Prüfung ermöglicht.

Ist das Hochleistungsnähgarn beziehungsweise Nähgarn Leiter einer Indikationsvorrichtung, kann die Indikationsvorrichtung eine durch elektrische Energie betriebene Vorrichtung zur Ermittlung, Speicherung und/oder Anzeige mindestens eines Datums über einen Zustand des Anschlagmittels sein.

Es kommen verschiedene bekannte Vorrichtungen in Betracht, so beispielhaft aktive oder passive Transponder, die im Zusammenwirken mit weiteren Sende-/und Empfangseinrichtungen das mindestens eine Datum über einen Zustand des Anschlagmittels erfassen, mit mindestens einem Istwert vergleichen und dies über eine Anzeigevorrichtung darstellen oder aber einen Verfahrensprozess einleiten, der einer Abweichung des Istzustands vom Sollzustand entgegenwirkt.

Die Erfindung wird nachfolgend anhand eines Ausführungsbeispiels unter Bezugnahme auf die Figur weiter erläutert. Dabei ergeben sich weitere Vorteile, Merkmale und Ausgestaltungen der Erfindung.

Es zeigt:

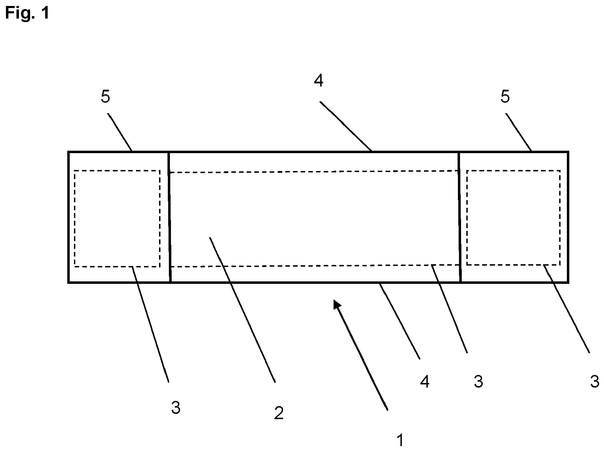

Fig. 1 eine schematische Darstellung eines Hebebands

Gemäß Fig. 1 weist das biegeschlaffe textile Anschlagmittel 1 in Form eines Hebebands ein Grundgewebe 2, gewebt aus einem Garn aus PES, auf, das ein hohes Dehnungsvermögen besitzt. Die Nähte 3 des Hebebands bestehen dagegen vollständig aus einem Nähgarn einer Chemiefaser mit einer definierten Temperaturbeständigkeit sowie einer definierten Schnitt- und Abriebfestigkeit, welche größer ist als die des Garns des Grundgewebes, nämlich aus LCP, einer Hochleistungsfaser, wodurch diese das Hochleistungsnähgarn bilden. Dies trifft sowohl für die Nähte **3** an der jeweiligen Langseite **4,** als auch an den Schlaufen **5** zu.

### Bezugszeichenliste

1. Anschlagmittel
2. Grundgewebe
3. Nähte
4. Langseite
5. Schlaufen

## Patentansprüche

1. Biegeschlaffes textiles Anschlagmittel (1) mit einem Grundgewebe (2) und mit Nähten (3), wobei das Grundgewebe (2) im Wesentlichen aus einem Chemiefasergarn mit einem definierten Dehnungsverhalten, beispielhaft PES, PA oder PP Garne und einer definierten Temperaturbeständigkeit, sowie einer definierten Schnitt- und Abriebfestigkeit besteht und wobei die Nähte (3) des biegeschlaffen textilen Anschlagmittels (1) zumindest teilweise aus einem Nähgarn einer Chemiefaser als Hochleistungsnähgarn mit einer definierten Temperaturbeständigkeit und/oder einer definierten Schnitt- und Abriebfestigkeit bestehen, welche größer ist als die des Chemiefasergarns des Grundgewebes (2).

2. Anschlagmittel (1) nach Anspruch 1, wobei das Hochleistungsnähgarn zumindest teilweise aus LCP, Polybenzoxazole (PBO), Aramiden, hochmoduligem Polyethylen (HMPE) und/oder (UHMPE/ UHMWPE) besteht.

3. Anschlagmittel (1) nach einem der Ansprüche 1 oder 2, wobei die Nähte (3) in Längsrichtung des biegeschlaffen textilen Anschlagmittels (1) ganz oder teilweise aus dem Hochleistungsnähgarn bestehen.

4. Anschlagmittel (1) nach einem der vorherigen Ansprüche, wobei parallel verschoben zu Langseiten (4) mindestens eine weitere Naht aus dem Hochleistungsnähgarn vorgesehen ist.

5. Anschlagmittel (1) nach einem der vorherigen Ansprüche, wobei diagonal zwischen den beiden Nähten (3) an den Langseiten (4) des biegeschlaffen textilen Anschlagmittels (1) mindestens eine weitere Naht aus dem Hochleistungsnähgarn vorgesehen ist.

6. Anschlagmittel (1) nach einem der vorherigen Ansprüche, wobei die Nähte (3) aus dem Hochleistungsnähgarn bestehen und gegenüber dem Grundgewebe (2) erhaben ausgestaltet sind.

7. Anschlagmittel (1) nach einem der vorherigen Ansprüche, wobei die Nähte (3) an Schlaufenenden und/oder an Schlaufen (5) ganz oder teilweise aus dem Hochleistungsnähgarn bestehen.

8. Anschlagmittel (1) nach einem der vorherigen Ansprüche, wobei das textile biegeschlaffe Anschlagmittel (1) mindestens eine wellenförmig gestaltete Naht aus dem Hochleistungsnähgarn in Längsrichtung aufweist.

9. Anschlagmittel (1) nach einem der Ansprüche 1 oder 2, wobei das Hochleistungsnähgarn der Nähte (3) des biegeschlaffen textilen Anschlagmittels (1) ganz oder teilweise aus einer Chemiefaser besteht, durch welche ein lasttragendes Innengelege des Anschlagmittels (1) in der Ausgestaltung einer Rundschlinge gebildet wird.

10. Anschlagmittel (1) nach Anspruch 9, wobei das Hochleistungsnähgarn der Nähte (3) aus mindestens einem Faden der Fadenschar gebildet ist, welcher das lasttragende Innengelege des Anschlagmittels (1) bildet.

11. Anschlagmittel (1) nach einem der Ansprüche 9 oder 10, wobei die Nähte (3) verdeckt sind.

12. Biegeschlaffes textiles Anschlagmittel (1) mit einem Grundgewebe (2) und mit Nähten (3), wobei das Grundgewebe (2) im Wesentlichen aus einem Chemiefasergarn mit einem definierten Dehnungsverhalten, beispielhaft PES, PA oder PP Garne und einer definierten Temperaturbeständigkeit sowie einer definierten Schnitt- und Abriebfestigkeit besteht und wobei die Nähte (3) des biegeschlaffen textilen Anschlagmittels (1) zumindest teilweise aus einem Nähgarn als Hochleistungsnähgarn bestehen, welches elektrisch leitfähig ist.

13. Anschlagmittel (1) nach Anspruch 12, wobei das elektrisch leitfähige Nähgarn ganz oder teilweise aus Kohlenstofffasern besteht.

14. Anschlagmittel (1) nach einem der Ansprüche 12 oder 13, wobei ein oder mehrere Nähte (3) des textilen biegeschlaffen Anschlagmittels (1) zumindest teilweise ein Leiter einer Sende- und/oder Empfangsvorrichtung und/oder einer Indikationsvorrichtung sind.

15. Anschlagmittel (1) nach Anspruch 14, wobei der Leiter ein elektrischer Stromleiter oder eine Antenne ist.

16. Anschlagmittel (1) nach Anspruch 14, wobei die Sende- und/oder Empfangsvorrichtung ein Transponder ist.

17. Anschlagmittel (1) nach Anspruch 16, wobei der Transponder ein Sensor zur Erfassung von mindestens einem Messdatum ist.

18. Anschlagmittel (1) nach Anspruch 14, wobei die Indikationsvorrichtung eine durch elektrische Energie betriebene Vorrichtung zur Ermittlung, Speicherung und/oder Anzeige mindestens eines Datums über einen Zustand des Anschlagmittels (1) ist.
